# EUROPÄISCHE PATENTSCHRIFT

(11) **EP 1 624 199 B1**
(45) Veröffentlichungstag und Bekanntmachung des Hinweises auf die Patenterteilung: **04.04.2007**
(21) Anmeldenummer: 05107191.8
(22) Anmeldetag: 04.08.2005
(51) Int. Cl.: F16B 13/12, E04B 1/78

(54) **Befestigungseinrichtung für Wärmedämm-Verbundsysteme**
Fastening device for composite heat insulation systems
Dispositif de fixation pour des systèmes composites d'isolation thermique

(30) Priorität: 05.08.2004 DE 102004038031
(43) Veröffentlichungstag der Anmeldung: 08.02.2006
(73) Patentinhaber: HILTI Aktiengesellschaft, 9494 Schaan (LI)
(72) Erfinder: Wieser, Jürgen, 86916, Kaufering (DE); Eckstein, Andreas, 86899, Landsberg am Lech (DE); Zimmerer, Claudia, 86153, Augsburg (DE)
(74) Vertreter: Wildi, Roland

(56) Entgegenhaltungen:
- DE-A1- 4 041 819
- DE-A1- 19 539 041
- DE-U1- 8 127 048

## Beschreibung

### Technisches Gebiet

Die Erfindung betrifft eine Befestigungseinrichtung für die Befestigung von Wärmedämm-Verbundsystemen an einer Unterkonstruktion, der im Oberbegriff des Patentanspruchs 1 genannten Art. Eine solche Befestigungseinrichtung ist aus der DE 195 39 041 A bekannt.

### Stand der Technik

Wärme- und schallisolierende Platten eines Wärmedämm-Verbundsystems dienen dem Schutz von Gebäuden gegen Wärmeverluste und Schallbelästigungen und werden häufig an den Aussenseiten des Gebäudes beispielsweise aufgeklebt und mittels Befestigungseinrichtungen zusätzlich befestigt. Die Befestigungseinrichtungen für die Befestigung von Platten an einer Unterkonstruktion weisen eine zumindest eine Spreizzone aufweisende Dübelhülse, die mit einer Druckplatte zur flächigen Anlage an den Platten versehen ist, sowie ein Spreizelement auf, das ein erstes Ende mit einer Einführspitze aufweist, die in die Spreizzone der Dübelhülse zum Aufspreizen derselben einführbar ist. Die Druckplatte ist beispielsweise mit der Dübelhülse koppelbar. Alternativ kann die Druckplatte einstückig mit der Dübelhülse ausgebildet sein. Nach dem Aufkleben der Platten werden durch dieselben hindurch Bohrungen in die Unterkonstruktion erstellt, in denen die Dübelhülse bis zur Anlage der Druckplatte an den Platten eingeführt wird. Mittels einzelner Hammerschläge oder einem anderen geeigneten Schlaggerät wird das Spreizelement in die Dübelhülse getrieben, wobei sich die Dübelhülse insbesondere im Bereich der Spreizzone aufweitet, so dass die Platten über die Befestigungseinrichtung an der Unterkonstruktion zusätzlich befestigt sind.

Diese Befestigungseinrichtungen dürfen keine wärmeleitenden Brücken bilden, die Wärme von der Unterkonstruktion an die Aussenseite der Platten transportieren. Um eine wärmeleitende Brücke zu verhindern, werden beispielsweise Spreizelemente aus Kunststoff verwendet. Die Spreizelemente aus Kunststoff können jedoch nur bedingt die auftretenden Kräfte übernehmen.

Weiter sind Spreizelemente aus Metall bekannt, die bessere Lastübertragungseigenschaften aufweisen. Infolge der auftretenden Korrosion an diesen Spreizelementen können sich jedoch an der Aussenseite des verputzten Wärmedämm-Verbundsystems Rostflecke bilden. Die Verwendung von rostfreiem Stahl zur Fertigung der Spreizelemente ist aus wirtschaftlichen Gründen nicht sinnvoll. Um die Bildung von Rostflecken zu vermeiden, wird das freie Ende von Spreizelementen aus herkömmliches Metall in die Dübelhülse vertieft eingetrieben und die Öffnung in der Druckplatte mit einem Stöpsel verschlossen. Durch das eingeschlossene Luftpolster zwischen dem freien Ende des Spreizelementes und der Innenseite des Stöpsels wird der Wärmedurchgang reduziert. Die Summe der reduzierten Wärmedurchgänge ist bei der Vielzahl der angeordneten Befestigungseinrichtungen jedoch immer noch gross, so dass diese Lösung nicht befriedigt.

Aus der DE 81 27 048 U1 ist eine Befestigungseinrichtung für die Befestigung von Wärmedämm-Verbundsystemen an einer Unterkonstruktion bekannt, das als Spreizelement einen Stahlstift mit einem Kopfelement aufweist, wobei das Kopfelement und ein angrenzender Schaftbereich mit einem Kunststoffüberzug versehen ist. Nachteilig an der bekannten Lösung ist, dass das Umspritzen einen kostenintensiven Arbeitsgang darstellt und spezielle Spritzgusswerkzeuge erfordert. Zwar werden mit dieser Befestigungseinrichtung Rostflecken an der verputzten Aussenseite des verputzten Wärmedämm-Verbundsystems weitgehend vermieden, die Reduktion des Wärmedurchgangs ist jedoch mit der Lösung vergleichbar, die ein eingeschlossenes Luftpolster zwischen dem freien Ende des Spreizelementes und der Innenseite eines Stöpsels aufweist.

Aus der DE 195 39 041 A1 ist eine Befestigungseinrichtung mit einem Spreizelement bekannt, das einen von der Spreizzone der Dübelhülse aufnehmbaren Spreizteil aus einem bruch- und scherfestem Werkstoff sowie einen sich im gesetzten Zustand von der Druckplatte bis zum Spreizteil erstreckenden Eintreibteil aus einem nicht-metallischen Werkstoff aufweist. Nachteilig an der bekannten Lösung ist, dass das Spreizelement aus zwei getrennten Teilen besteht, die keine kraftschlüssige Verbindung haben. Der Eintreibteil übernimmt die Funktion eines Setzwerkzeuges für das Spreizelement und trägt nur unwesentlich zu der Lastabtragung bei.

### Darstellung der Erfindung

Aufgabe der Erfindung ist es, eine Befestigungseinrichtung für die Befestigung von Wärmedämm-Verbundsystemen an einer Unterkonstruktion zu schaffen, das gute wärmeisolierende Eigenschaften sowie Lastübertragungseigenschaften aufweist. Zudem soll die Befestigungseinrichtung einfach anwendbar und kostengünstig zu fertigen sein.

Die Aufgabe ist durch die Merkmale des unabhängigen Anspruchs gelöst. Vorteilhafte Weiterbildungen sind in den Unteransprüchen dargelegt.

Gemäss der Erfindung weist das Spreizelement einen Hohlraum auf.

Durch den Hohlraum im Spreizelement ist ein grosses Luftpolster im Befestigungselement vorhanden, womit die Wärmeübertragung von der Unterkonstruktion an die Aussenseite des Wärmedämm-Verbundsystems auf ein Minimum reduziert ist. Zur Schaffung einer weitgehend durchgehenden Fläche an dem Wärmedämm-Verbundsystem, wie sie beispielsweise für dünnschichtige Dispersionsputze erforderlich und für andere Arten von Verputze erwünscht ist, werden die Öffnungen in der Druckplatte mit einem Stöpsel verschlossen, so dass eine vorteilhafte Isolierwirkung infolge des grossen Luftpolsters gegeben ist.

Vorzugsweise ist das Spreizelement aus einem metallischen Werkstoff gefertigt. Querlasten werden bei dem Wärmedämm-Verbundsystem hauptsächlich durch die Klebeschicht übernommen, so dass der vorhandene Querschnitt des Spreizelementes für die Übertragung der restlichen Querkraftkomponente ausreicht. Massgebend für das Spreizelement sind jedoch die auftretenden Zuglasten infolge der Verankerung in der Unterkonstruktion und der auf das Wärmedämm-Verbundsystemen wirkenden Windbelastungen, die durch das Spreizelement aus einem metallischen Werkstoff in Verbindung mit der Dübelhülse in ausreichender Weise aufnehmbar sind.

Bevorzugt ist das Spreizelement aus einem Flachmaterial geformt. Beispielsweise ist das Spreizelement aus einem in Form gebrachtes Stahlblech gebildet und weist im Wesentlichen eine hülsenförmige Ausgestaltung auf. Die aneinander liegenden Kanten können z. B. miteinander verschweisst oder verlötet sein. Bei einer ausreichenden Steifigkeit des verwendeten Flachmaterials kann auf die Verbindung der aneinander zu liegen kommenden Kanten verzichtet werden. In einer erfindungsgemässen Variante ist das Spreizelement aus einem Vollkörper gebildet, der mit einer, vorteilhaft zentrischen Bohrung versehen ist.

Vorzugsweise ist der Hohlraum des Spreizelementes mit einem wärmedämmenden Stoff oder Medium gefüllt. Mit diesem Spreizelement wird auch ein allfällig noch vorhandener Wärmedurchgang fast vollständig unterbunden. Beispielsweise wird der Hohlraum mit einem Wärmedämmschaum verfüllt oder ein geeignetes Gas, wie z. B. Argon, wird in dem Hohlraum vorgesehen.

Bevorzugt weist das Spreizelement ein, dem ersten Ende gegenüberliegendes zweites Ende mit einem Kopfelement auf, womit ein Anschlag zum Setzen des Spreizelementes in der Dübelhülse vorhanden ist. Gleichzeitig bildet das Kopfelement eine visuell wahrnehmbare Setzanzeige für den Anwender.

Vorzugsweise ist das Spreizelement an seiner Aussenseite mit einer Profilierung versehen, so dass beim Eintreiben des Spreizelementes ein Formschluss zwischen dem Spreizelement und der Dübelhülse geschaffen wird. Die Profilierung kann nur bereichsweise oder von einem zu dem anderen Ende verlaufend an dem Spreizelement vorgesehen sein.

Bevorzugt ist das Spreizelement an seiner Aussenseite mit einem Gewinde versehen, so dass das Spreizelement in die Dübelhülse einschraubbar ist und zwischen dem Spreizelement und der Dübelhülse ein Formschluss geschaffen wird. Das Gewinde kann nur bereichsweise oder von einem zu dem anderen Ende verlaufend an dem Spreizelement vorgesehen sein. Neben dem Gewinde kann zusätzlich eine Profilierung an dem Spreizelement vorgesehen sein.

Vorteilhaft ist an dem Kopfelement des Spreizelementes eine Drehmomentaufnahme für ein Schraubmittel vorgesehen, so dass insbesondere bei einem Spreizelement, das an seiner Aussenseite mit einem Gewinde versehen ist, das Setzen vereinfacht ist. Schraubmittel sind beispielsweise Schraubenzieher oder Schraubbits in Kombination mit den geeigneten Geräten. Die Drehmomentaufnahme ist entsprechend des zum Einsatz vorgesehenen Schraubmittels z. B. als Schlitz, Kreuzschlitz oder Torx ausgebildet.

Bevorzugt weist das Spreizelement an der Einführspitze ein Einziehgewinde auf. Insbesondere bei einem drehenden Setzen des Spreizelementes in einer Dübelhülse, die am in Setzungsrichtung liegenden Ende verschlossen oder stark verengt ist, wird mit dem Einziehgewinde der Setzvorgang wesentlich vereinfacht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
Fig. 1 Einen Längsschnitt durch eine Befestigungseinrichtung;
Fig. 2 einen Längsschnitt durch ein Ausführungsbeispiel eines Spreizelementes;
Fig. 3 einen Längsschnitt durch ein weiteres Ausführungsbeispiel eines Spreizelementes;
Fig. 4 eine Seitenansicht auf ein weiteres Ausführungsbeispiel eines Spreizelementes; und
Fig. 5 eine Ansicht auf das Kopfelement gemäss Linie V-V in Fig. 4.

Grundsätzlich sind in den Figuren gleiche Teile mit den gleichen Bezugszeichen versehen.

### Wege zur Ausführung der Erfindung

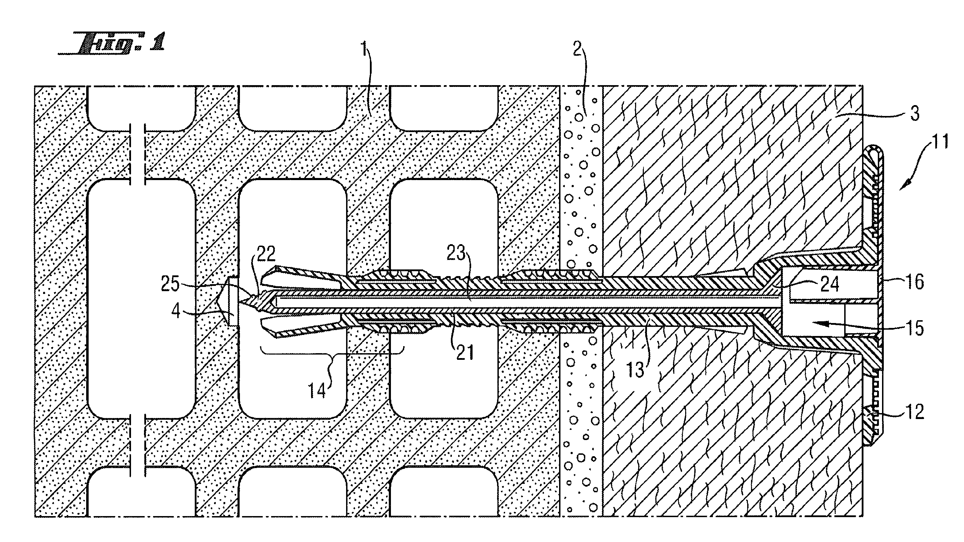

In der Fig. 1 ist eine erfindungsgemässe Befestigungseinrichtung 11 zur Befestigung einer Dämmplatte 3 eines Wärmedämm-Verbundsystems gezeigt. Die Dämmplatte 3 ist über eine Klebeschicht 2 an der Unterkonstruktion 1, hier Hohlziegel, angeordnet. Die Befestigungseinrichtung 11 weist eine Druckplatte 12, eine Dübelhülse 13 mit einer Spreizzone 14 und ein Spreizelement 21 mit einer Einführspitze 22 an einem ersten Ende auf, die in die Spreizzone 14 der Dübelhülse 13 zum Aufspreizen derselben einführbar ist. An dem zweiten, dem ersten Ende des Spreizelementes 21 gegenüberliegenden Ende weist das Spreizelement 21 ein Kopfelement 24 als Anschlag auf. Das Spreizelement 21 ist aus einem metallischen Werkstoff gefertigt und weist einen Hohlraum 23 auf. An der Einführspitze 22 ist ein Einziehgewinde 25 ausgebildet.

Nachfolgend wird anhand der Fig. 1 der Setzvorgang der Befestigungseinrichtung 11 dargelegt. In einem ersten Schritt wird auf die Unterkonstruktion 1 die Kleberschicht 2 aufgebracht und die Dämmplatten 3 an der Unterkonstruktion 1 aufgeklebt. Anschliessend werden in vorbestimmten Abständen durch die Dämmplatte 3 und die Kleberschicht 2 hindurch Bohrungen 4 in die Unterkonstruktion 1 eingebracht. Die Dübelhülse 13 wird bis zum Anliegen der Druckplatte 12 an der Dämmplatte 3 in die erstellte Bohrung 4 eingeführt. Nun wird das Spreizelement 21 in die Dübelhülse 13 eingeführt und beispielsweise mittels mehreren Hammerschlägen oder unter Zuhilfenahme eines geeigneten Hilfswerkzeuges in die Dübelhülse 13 eingetrieben, wobei sich die Spreizzone 14 der Dübelhülse 13 aufweitet. Zum Schluss wird die Öffnung 15 in der Druckplatte 12 mit einem Stöpsel 16 verschlossen. Dabei wird nicht nur eine im Wesentlichen ebene Fläche zum Aufbringen des Putzes an der Aussenseite der Druckplatte geschaffen, sondern auch die Isolierwirkung des Luftpolsters im Hohlraum 23 des Spreizelementes 21 vorteilhaft unterstützt.

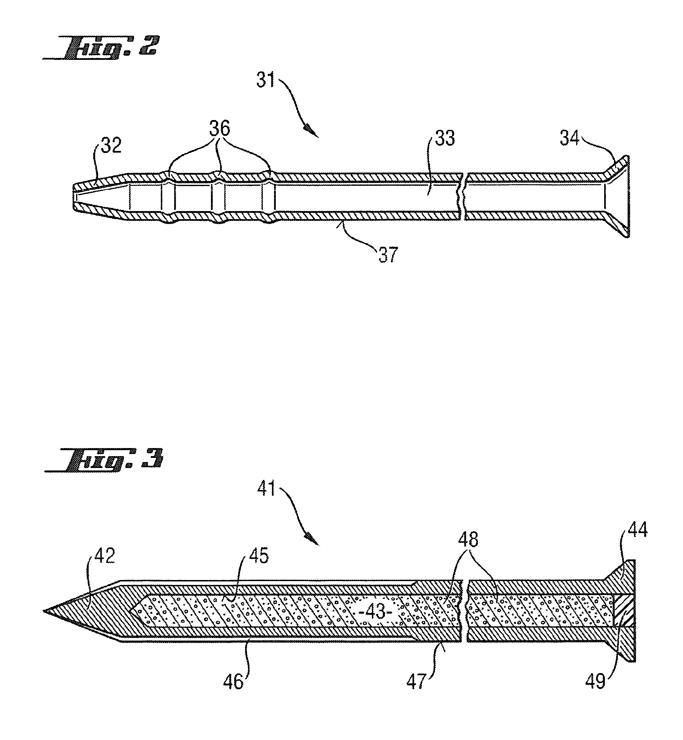

Das in Fig. 2 dargestellte Spreizelement 31 ist aus einem Flachmaterial unter Bildung eines Hohlraums 33 geformt und weist ein erstes Ende mit einer Einführspitze 32 und ein zweites Ende mit einem Kopfelement 34 auf. In einem, an die Einführspitze 32 angrenzenden Bereich ist eine Profilierung 36 an der Aussenseite 37 des Spreizelementes 31 vorgesehen.

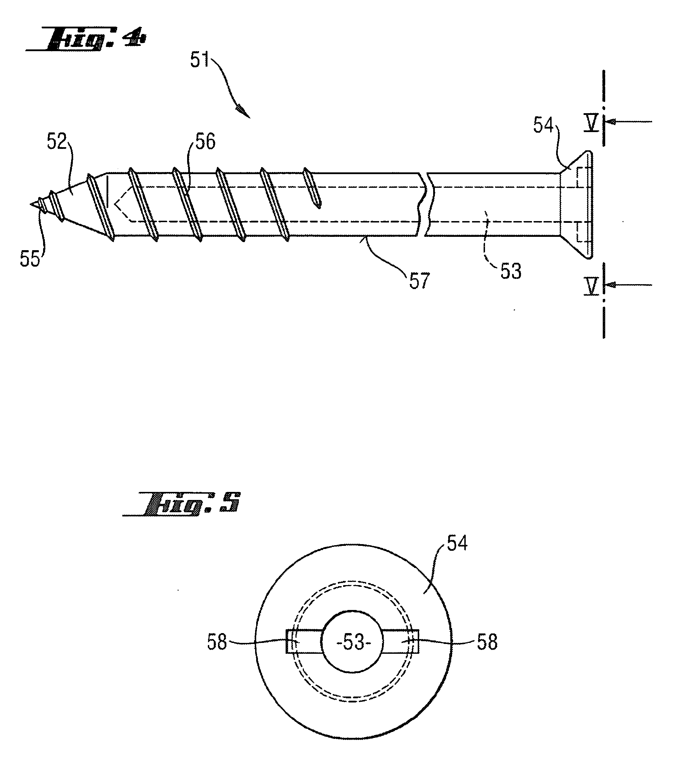

Das in Fig. 3 dargestellte Spreizelement 41 ist aus einem Vollkörper geformt, der zur Bildung eines Hohlraums 43 mit einer Bohrung 45 versehen ist. Das Spreizelement 41 weist ein erstes Ende mit einer Einführspitze 42 und ein zweites Ende mit einem Kopfelement 44 auf. Ausgehend von der Einführspitze 42 ist eine längs in Richtung des Kopfelementes 44 verlaufende Profilierung 46 bereichsweise an der Aussenseite 47 des Spreizelementes 41 vorgesehen. Der Hohlraum 43 ist mit einem wärmedämmenden Stoff 48, z. B. einem Wärmedämmschaum verfüllt und mittels eines Stopfens 49 verschlossen.

Das in den Fig. 4 und Fig. 5 gezeigte, in die Dübelhülse 13 einschraubbare Spreizelement 51 mit einem Hohlraum 53 weist im Gegensatz zu den oben dargelegten Ausführungsformen der Spreizelemente 21, 31 oder 41 an seiner Aussenseite 57 ein bereichsweise verlaufendes Gewinde 56 auf, das von der Einführspitze 52 ausgehend angeordnet ist. An der Einführspitze 52 ist ein Einziehgewinde 55 vorgesehen. An dem Kopfelement 54 des Spreizelementes 51 ist eine schlitzförmige Drehmomentmitnahme 58 beispielsweise für einen Flachschraubenzieher ausgebildet.

## Patentansprüche

1. Befestigungseinrichtung für die Befestigung von Wärmedämm-Verbundsystemen an einer Unterkonstruktion (1) mit einer zumindest eine Spreizzone (14) aufweisende Dübelhülse (13), die mit einer Druckplatte (12) versehen ist, sowie mit einem Spreizelement (21; 31; 41; 51), das ein erstes Ende mit einer Einführspitze (22; 32; 42; 52) aufweist, die in die Spreizzone (14) der Dübelhülse (13) zum Aufspreizen derselben einführbar ist, **dadurch gekennzeichnet, dass** das Spreizelement (21; 31; 41; 51) einen Hohlraum (23; 33; 43; 53) aufweist.

2. Befestigungseinrichtung nach Anspruch 1, **dadurch gekennzeichnet, dass** das Spreizelement (21; 31; 41; 51) aus einem metallischen Werkstoff gefertigt ist.

3. Befestigungseinrichtung nach Anspruch 1 oder 2, **dadurch gekennzeichnet, dass** das Spreizelement (21; 31) aus einem Flachmaterial geformt ist.

4. Befestigungseinrichtung nach einem der Ansprüche 1 bis 3, **dadurch gekennzeichnet, dass** der Hohlraum (43) des Spreizelementes (41) mit einem wärmedämmenden Stoff (48)
oder Medium gefüllt ist.

5. Befestigungseinrichtung nach einem der Ansprüche 1 bis 4, **dadurch gekennzeichnet, dass** das Spreizelement (21; 31; 41; 51) ein, dem ersten Ende gegenüberliegendes zweites Ende mit einem Kopfelement (24; 34; 44; 54) aufweist.

6. Befestigungseinrichtung nach einem der Ansprüche 1 bis 5, **dadurch gekennzeichnet, dass** das Spreizelement (31; 41) an seiner Aussenseite (37; 47) mit einer Profilierung (36; 46) versehen ist.

7. Befestigungseinrichtung nach einem der Ansprüche 1 bis 6, **dadurch gekennzeichnet, dass** das Spreizelement (51) an seiner Aussenseite (57) mit einem Gewinde (56) versehen ist.

8. Befestigungseinrichtung nach einem der Ansprüche 5 bis 7, **dadurch gekennzeichnet, dass** an dem Kopfelement (54) des Spreizelementes (51) eine Drehmomentaufnahme (58) für ein Schraubmittel vorgesehen ist.

9. Befestigungseinrichtung nach einem der Ansprüche 1 bis 8, **dadurch gekennzeichnet, dass** das Spreizelement (21; 51) an der Einführspitze (22; 52) ein Einziehgewinde (25; 55) aufweist.

## Claims

1. Fastening device for securing composite thermal insulation systems to a support structure (1), comprising a plug sleeve (13) which has at least one spreading zone (14) and is provided with a pressure plate (12), and a spreader element (21; 31; 41; 51) having a first end with an insertion tip (22; 32; 42; 52) which is insertable into the spreading zone (14) of the plug sleeve (13) for spreading same, **characterised in that** the spreader element (21; 31; 41; 51) includes a cavity (23; 33; 43; 53).

2. Fastening device according to claim 1, **characterised in that** the spreader element (21; 31; 41; 51) is made of a metallic material.

3. Fastening device according to claim 1 or 2, **characterised in that** the spreader element (21; 31) is formed from a flat material.

4. Fastening device according to any one of claims 1 to 3, **characterised in that** the cavity (43) of the spreader element (41) is filled with a thermally insulating material (48) or medium.

5. Fastening device according to any one of claims 1 to 4, **characterised in that** the spreader element (21; 31; 41; 51) has a second end with a head element (24; 34; 44; 54) opposite to the first end.

6. Fastening device according to any one of claims 1 to 5, **characterised in that** the spreader element (31; 41) is provided with profiling (36; 46) on its outside (37; 47).

7. Fastening device according to any one of claims 1 to 6, **characterised in that** the spreader element (51) is provided with a screw thread (56) on its outside (57).

8. Fastening device according to any one of claims 5 to 7, **characterised in that** a torque take-up element (58) for a screwing means is provided in/on the head element (54) of the spreader element (51).

9. Fastening device according to any one of claims 1 to 8, **characterised in that** the spreader element (21; 51) has a pulling-in screw thread (25; 55) on its insertion tip (22; 52).

## Revendications

1. Dispositif de fixation pour la fixation de systèmes composites d'isolation thermique à une structure porteuse (1), avec un manchon de cheville (13) qui comporte au moins une zone d'expansion (14) et qui est muni d'une plaque de pression (12) et avec un élément d'expansion (21 ; 31 ; 41 ; 51) qui comporte une première extrémité avec une pointe d'introduction (22 ; 32 ; 42 ; 52) apte à être introduite dans la zone d'expansion (14) du manchon de cheville (13) pour l'expanser, **caractérisé en ce que** l'élément d'expansion (21 ; 31 ; 41 ; 51) est pourvu d'une cavité (23 ; 33 ; 43 ; 53) .

2. Élément de fixation selon la revendication 1, **caractérisé en ce que** l'élément d'expansion (21 ; 31 ; 41 ; 51) est réalisé en matériau métallique.

3. Dispositif de fixation selon la revendication 1 ou 2, **caractérisé en ce que** l'élément d'expansion (21 ; 31) est façonné à partir de matériau plat.

4. Dispositif de fixation selon une des revendications 1 à 3, **caractérisé en ce que** la cavité (43) de l'élément d'expansion (41) est remplie de matière thermo-isolante (48) ou d'agent thermo-isolant.

5. Dispositif de fixation selon une des revendications 1 à 4, **caractérisé en ce que** l'élément d'expansion (21 ; 31 ; 41 ; 51) comporte, à l'opposé de la première extrémité, une seconde extrémité avec un élément de tête (24 ; 34 ; 44 ; 54).

6. Dispositif de fixation selon une des revendications 1 à 5, **caractérisé en ce que**, sur son côté extérieur (37 ; 47), l'élément d'expansion (31 ; 41) est muni d'un profilage (36 ; 46).

7. Dispositif de fixation selon une des revendications 1 à 6, **caractérisé en ce que**, sur son côté extérieur (57), l'élément d'expansion (51) est muni d'un filetage (56).

8. Dispositif de fixation selon une des revendications 5 à 7, **caractérisé en ce que** sur l'élément de tête (54) de l'élément d'expansion (51) est prévu un moyen de réception de couple (58) pour un moyen de vissage.

9. Dispositif de fixation selon une des revendications 1 à 8, **caractérisé en ce que**, sur la pointe d'introduction (22 ; 52), l'élément d'expansion (21 ; 51) comporte un filetage d'enfoncement (25 ; 55).
